# EUROPEAN PATENT APPLICATION

(11) **EP 0 833 255 A2**
(43) Date of publication of application: **01.04.1998**
(21) Application number: 97116994.1
(22) Date of filing: 30.09.1997
(51) Int. Cl.: G06F 15/80, G06F 15/16

(54) **Multi-processor system using an optical communication with a different frequency band for each communication destination**

(30) Priority: 30.09.1996 JP 278984/96
(71) Applicant: NEC CORPORATION, Tokyo (JP)
(72) Inventor: Wadasaki, Shuzo, Minato-ku, Tokyo (JP)
(74) Representative: Betten & Resch

(57) **Abstract**

A plurality of processors and at least one memory are optically connected each other through an optical fiber cable. Each of the plurality of processors and the at least one memory is assigned a different frequency band. Each of the plurality of processors has light emitting devices each corresponding to respective frequency bands of destinations. Each of the plurality of processors selects one of the light emitting devices. Each of the plurality of processors further has an optical filter passing through only optical signals of a frequency band that has been assigned to the processor. Each of the at least one memory also has a light emitting device and an optical filter the same as those in each processor. It is unnecessary to send information on destination addresses since the frequency band of optical signals identifies a destination.

## Description

### BACKGROUND OF THE INVENTION

The present invention relates to a multi-processor system with several processors and memories, particularly relating to a multi-processor system having a reduced number of the wiring.

Recently, a multi-processor system is utilized for high-performance processing. In multi-processor systems, there are roughly two approaches, a distributed memory approach and a shared memory approach. In multi-processor systems with the distributed memory approach, each processor includes a local memory. The distributed memory approach is suitable for the way in which each processor executes an independent program. However, when reference to the memory of another processor is necessary, copying between memories is needed. Thus, enhancing the processing speed proves to be difficult. In contrast, since all the memory areas are shared in the shared memory approach, it is not necessary to copy between memories. Thus, the system attains high-speed processing even when data in another processor is referenced.

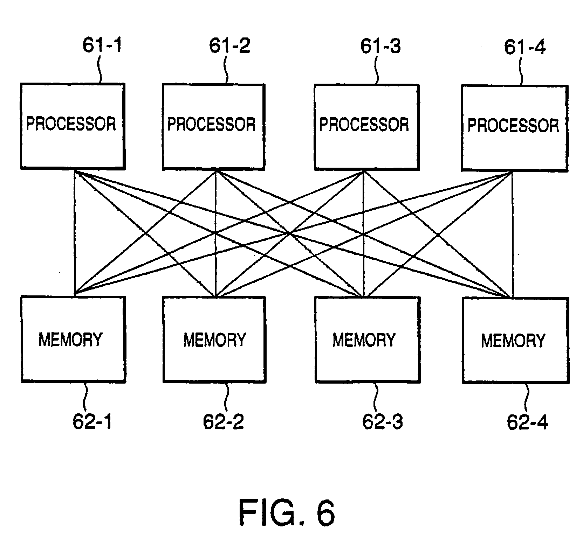

Referring to FIG. 6, multi-processor systems in a conventional shared memory approach have six processors 61-1 through 61-4 and four memories 62-1 through 62-4.

Processors 61-1 through 61-4 are connected via electric signal lines (e.g. a crossbar switch) to memories 62-1 through 62-4. In such multi-processor systems, each of the processors 61-1 through 61-4 can access the content of memories 62-1 through 62-4 without the copying between memories required by the distributed memory approach, thereby increasing the processing speed.

According to the conventional system shown in FIG. 6, high speed processing is possible, however, there is a problem in that the wiring structure becomes very complex because all the processors and memories in the multi-processor system have to be connected with electric signal lines. For example, the multi-processor system having four processors and four memories shown in FIG. 6, requires 1024 (= 4 x 4 x 64) signal lines in order to transmit 64 bit data. To further exemplify, a multi-processor system having 16 processors and 16 memories, requires 16384 (= 16 x 16 x 16 ) signal lines in order to transmit 64 bit data.

### SUMMARY OF THE INVENTION

In view of the foregoing problem of the conventional system, an object of the present invention is to solve the aforementioned problems, and provide a multi-processor system which significantly decreases the necessary number of wiring connections.

In a multi-processor system according to a first aspect of the present invention, a plurality of processors and at least one memory are optically connected each other. The plurality of processors and the at least one memory are assigned a different frequency band. One of the plurality of processors and the at least one memory transmits a communication to another one of the plurality of processors and the at least one memory as a destination using a frequency band assigned to the destination.

### BRIEF DESCRIPTION OF THE DRAWINGS

The above-mentioned and other objects, features and advantages of this invention will become more apparent by reference to the following detailed description of the invention taken in conjunction with the accompanying drawings in which:
FIG. 1 is a block diagram showing the configuration of a multi-processor system according to an embodiment of the present invention;
FIG. 2 is a block diagram showing the configuration of processor 1-1 of an embodiment according to the present invention.
FIG. 3 is a block diagram showing the configuration of memory 2-1 of an embodiment according to the present invention.
FIG. 4 is a block diagram showing the configuration of arbitrator 3 of an embodiment according to the present invention.
FIG. 5 is a flowchart showing the operation of arbitrator 3 of an embodiment according to the present invention.
FIG. 6 shows an example of conventional multi-processor systems.

### DETAILED DESCRIPTION OF THE PREFERRED EMBODIMENT

A multi-processor system in accordance with a preferred embodiment of the present invention will be described in detail with reference to the accompanying drawings.

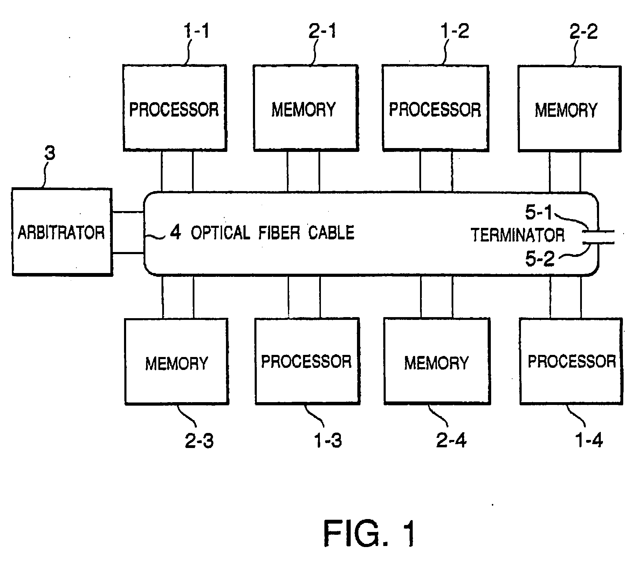

Referring to FIG. 1, a multi-processor system according to the present invention has four processors 1-1 through 1-4, four memories 2-1 through 2-4, an arbitrator 3, an optical fiber cable 4, and terminators 5-1 through 5-2. The optical fiber cable 4 forms a bus, on both ends of which terminators 5-1 and 5-2 are connected. Connected to the optical fiber cable 4 are the processors 1-1 through 1-4, the memories 2-1 through 2-4, and the arbitrator 3. With this configuration, both inter-processor communication and processor-memory communication can be made through the optical fiber cable 4.

Different frequency bands are assigned to the processors 1-1 through 1-4, the memories 2-1 through 2-4, and the arbitrator 3, respectively. In the embodiment, the processors 1-1 through 1-4 are assigned frequency bands TP1 through TP4, respectively, while the memories 2-1 through 2-4 are assigned frequency bands TM1 through TM4, respectively. In addition, the arbitrator 3 is assigned frequency bands TA1 through TA4 corresponding to the processors 1-1 through 1-4 in order to distinguish communication requests having different destinations.

Sufficient margins are prepared in respective frequency bands to prevent from frequency interference. For example, a transmission frequency 193 THz an interval of wavelength channel 100 GHz can be used.

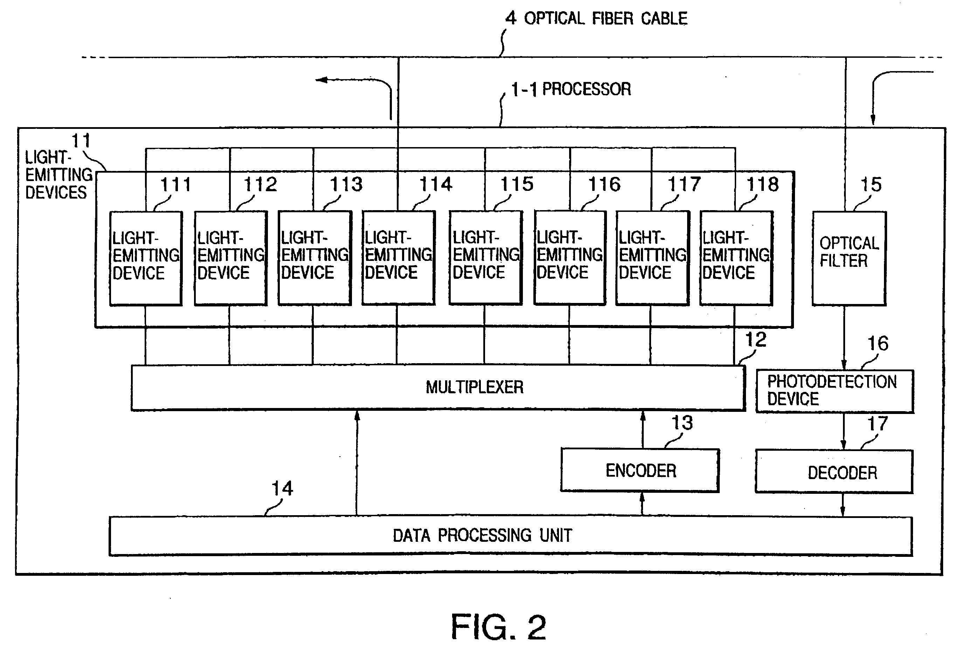

Referring to FIG. 2, the processor 1-1 includes light-emitting devices 11 (111 through 118), a multiplexer 12, an encoder 13, a data processing unit 14, an optical filter 15, a photo-detection device 16, and a decoder 17. The light-emitting devices 11, the multiplexer 12 and the encoder 13 form a processor light emitting circuit. The optical filter 15, the light-emitting device 16, and the decoder 17 form a processor photo-detection circuit. Further, the other processors have the same configurations as these configurations.

The light-emitting devices 111 through 113 output optical signals of frequency bands TP2 through TP4 assigned to respective processors 1-2 through 1-4. The light-emitting devices 114 through 117 output optical signals of frequency-bands TM1 through TM4 assigned to respective memories 2-1 through 2-4. The light emitting device 118 outputs an optical signal of frequency-band TA1 assigned to arbitrator 3. A high-speed response, semiconductor laser, with a stabilized oscillation frequency, is preferred for the light emitting devices 111 through 118.

The encoder 13 modulates "information" in digital signals outputted from data processor 14 into signals of a frequency band assigned to the destination apparatus. In this case, "information" means a series of bits to be sent.

The multiplexer 12 selects a light emitting device, corresponding to the destination, in the light emitting devices 11 according to the instruction received from the data processing unit 14, and sends the output from the encoder 13 to the selected light emitting device.

The optical filter 15 filters only the optical signals of frequency band TP1 which is assigned to the processor 1-1, and sends optical signals through the optical fiber cable 4. For example, a wave-guide type branching filter, a diffraction grating type branching filter is used for optical filter 15. The photo-detection device 16 converts optical signals passed through optical filter 15 into electric signals. The decoder 17 converts the output from the photo-detection device 16 into digital signals which can be processed in the data processing unit 14.

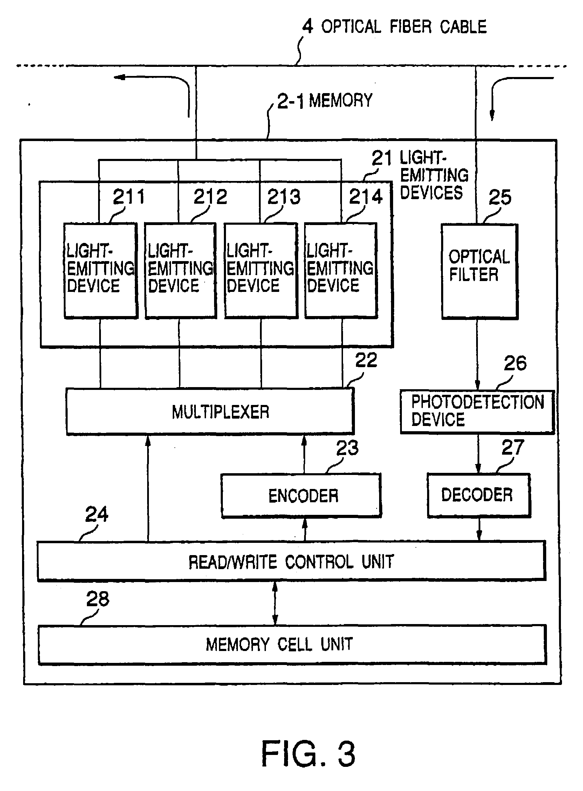

Referring to FIG. 3, the memory 2-1 comprises light emitting devices 21 (211 through 214), a multiplexer 22, an encoder 23, a read/write control unit 24, an optical filter 25, a photo-detection device 26, a decoder 27, and a memory cell unit 28. The light emitting devices 21, the multiplexer 22, and the encoder 23 form a memory light emitting circuit. The optical filter 25, the photo-detection device 26, and the decode 27 form a memory photo-detection circuit. Further, the other memories have the same configuration.

The light emitting devices 211 through 214 output optical signals of frequency bands TP1 through TP4 assigned to the processors 1-1 through 1-4 respectively. The encoder 23 modulates read data outputted from the read/write control unit 24 into signals of the frequency band assigned to the destination apparatus. The multiplexer 22 selects a light emitting device in compliance with a read request from the light emitting devices 211 through 214 according to the instruction from the read/write control unit 24, and sends the output from the encoder 23 to the selected light emitting device.

The optical filter 25 filters out other than optical signals of the frequency band TM1 assigned to memory 2-1. The photo-detection device 26 converts optical signals outputted from the optical filter 25 into electric signals. The decoder 27 converts the output of the photo-detection device 26 into digital signals which can be processed by the read/write control unit 24.

The read/write control unit 24 controls data reading/writing from/to the memory cell unit 28, and also controls the multiplexer 22. That is, in a case of a read request, the read/write control unit 24 determines an address and an amount of data in accordance with the read request sent from another processor. According to the amount of data determined, the necessary data is taken from the memory cell unit 28, and is encoded into optical signals. In addition, the read/write control unit 24 sends a control signal for specifying a destination of the data. In a case of a write request, the read/write control unit 24 determines an address and an amount of data in accordance with the read request sent from another processor. According to the amount of data determined, the data is written at the determined address.

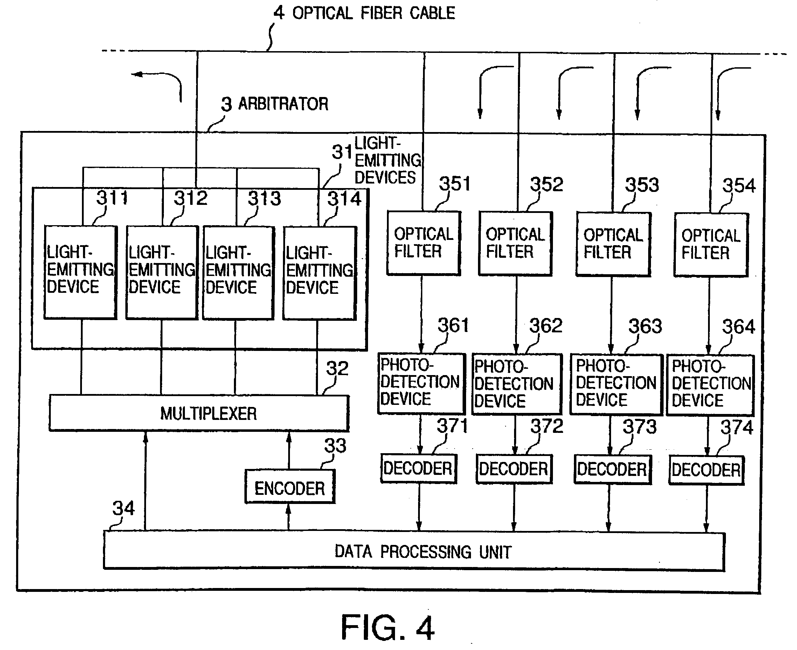

Referring to FIG. 4, the arbitrator 3 comprises light emitting devices 31 (311 through 314), a multiplexer 32, an encoder 33, a data processing unit 34, optical filters 351 through 354, photo-detection devices 361 through 364, and decoders 371 through 374.

The light emitting devices 311 through 314 output optical signals of frequency bands TP1 through TP4 assigned to processors 1-1 through 1-4, respectively. The encoder 33 converts digital signals outputted from the data processing unit 34 into signals of the frequency band assigned to the corresponding destination. The multiplexer 32 selects a light emitting device corresponding to a transmission destination of processor from the light emitting devices 311 through 314 in compliance with a direction of the data processing unit 34, and applies the output of the encoder 33 to the selected light emitting device.

The light emitting devices 311 through 314, the multiplexer 32, and the encoder 33 form an arbitrator light emitting circuit. The optical filters 351 through 354, the photo-detection devices 361 through 364, and the decoders 371 through 374 form an arbitrator photo-detection circuit.

The optical filters 351 through 354 allow only optical signals of assigned frequency bands TA1 through TA4, which are assigned to arbitrator 3, respectively. The photo-detection devices 361 through 364 convert optical signals outputted from respective optical filters 351 through 354. The decoders 371 through 374 convert the outputs of the photo-detection devices 361 through 364 into digital signals which can be processed in the digital processing unit 34.

The operation of the embodiment will be described below with reference to figures.

It is assumed that the processors 1-1 and 1-2 issue write requests to the memory 2-1 simultaneously, while the processor 1-3 issues a read-request to the memory 2-2 simultaneously.

Referring to FIG. 2, the data processing unit 14 in the processor 1-1 controls the multiplexer 12 to apply the outputs of the encoder 13 to the light emitting device 117 which corresponds to the arbitrator 3. The data processing unit 14 outputs destination information indicating a destination (the memory 2-1) and a communication request including the identification (ID) of source (the processor 1-1). The communication request is applied to the light emitting device 118 corresponding to the arbitrator 3 via the encoder 13 and the multiplexer 12. Accordingly, the light emitting device 118 converts the communication request outputted from the data processing unit 14 into optical signals of the frequency band TA1 assigned to the arbitrator 3, and outputs them to the optical fiber cable 4.

The same processing is performed in the processors 1-2 and 1-3, where the processors 1-2 and 1-3 output communication requests in optical signals of the respective frequency bands TA2 and TA3 to the optical fiber cable 4.

The referring to FIG. 4, the communication requests from the respective processors 1-1 through 1-3 are outputted via optical fiber cable 4 to optical filters 351 through 353 in arbitrator 3, respectively. The communication requests are applied to the data processing unit 34 via the photo-detection devices 361 through 363 and decoders 371 through 373, respectively.

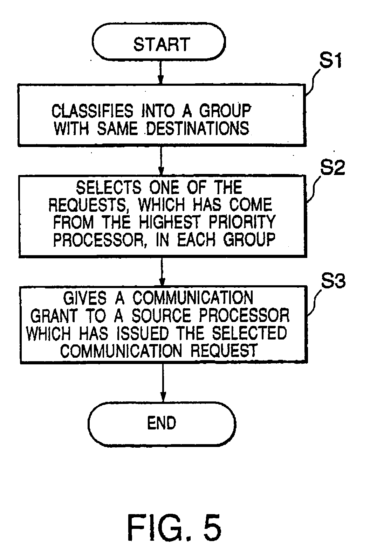

Referring to FIG. 5, when the data processing unit 34 receives the communication requests from each of processors 1-1 through 1-3, it classifies the received communication requests into groups each containing requests with the same communication destinations (Step S1). In the embodiment, since it is assumed that the communication requests from processors 1-1 and 1-2 are for memory 2-1 as a destination, and the communication request from processor 1-1 is for memory 2-2 as a destination, the group of communication requests from the processors 1-1 and 1-2 are separated from the group of communication requests from the processor 1-3.

The data processing unit 34 selects a communication request with the highest priority processor in each group (Step S2). Here, when, for example, the priorities of the processors 1-1 through 1-4 are assumed to be arranged from high to low in order of the processors 1-1, 1-2, 1-3 and 1-4, the data processing unit 34 selects the communication request from the processor 1-1 and the communication request from processor 1-3.

Following that, the data processing unit 34 grants the selected processors 1-1 and 1-3 to make a communication based on its communication request (Step S3). In other words, the data processing unit 34 outputs communication grant signals for the processors 1-1 and 1-3 to the encoder 33, while it controls the multiplexer 32 to apply the communication grant signals for the processors 1-1 and 1-3 to the light emitting devices 311 and 313, in order. Accordingly, optical signals of the frequency band TP1 indicating communication grant to the optical fiber cable 4 are outputted from the light emitting device 311, while optical signals of the frequency band TP3 indicating communication grant to the optical fiber cable 4 are outputted from the light emitting device 313, thereby transmitting both signals through the optical fiber cable 4. In short, by making use of the coherent-nature of light, different optical signals of several frequency bands are transmitted simultaneously.

If a processor is not granted the communication, the processor may request the communication request again at a given timing, or may perform another process which can be performed within the processor after storing the communication request in a buffer (not shown). After the process is completed, the processor may requests the communication request stored in the buffer.

Referring to FIG. 2, optical signals of the frequency bands TP1 and TP2 are converted into data signals which can be processed in the data processing unit 14 by then optical filter 15, the photo-detection device 16 and the decoder 17 in the processors 1-1 and 1-3.

The data processing unit 14 in the processor 1-1 controls the multiplexer 12 to apply the output of the encoder 13 to the light emitting device 114 corresponding to the memory 2-1, and outputs a write-address and write-data to the encoder 13. Accordingly, the write-address and the write-data are converted through the light emitting device 114 into optical signals of the frequency band TM1, and outputted to the optical fiber cable 4.

The data processing unit 14 in the processor 1-3 controls the multiplexer 12 to apply the output of the encoder 13 to the light emitting device 115 corresponding to the memory 2-2, and outputs a read-address and the ID of processor 1-3 to the encoder 13. Accordingly, the read-address and the ID are converted by the light emitting device 115 into optical signals of the frequency band TM2. The optical signals are outputted to the optical fiber cable 4.

The optical signals of the frequency band TM1 which indicate the write-address and write-data outputted from the processor 1-1 are converted into digital signals which can be processed in the read/write control unit 24 by the optical filter 25, the photo-detection device 26 and the decoder 27 in the memory 2-1. The read/write control unit 24 writes data into the memory cell unit 28 in accordance with write-address and write-data outputted from the decoder 27.

The optical signals of the frequency band TM2 which indicate the read-address and ID outputted from the processor 1-3 are converted into digital signals which can be processed in the read/write control unit 24 by the optical filter 25, the photo-detection device 26 and the decoder 27 in the memory 2-2. In accordance with digital signals, the read/write control unit 24 commands the multiplexer 22 to apply the output of the encoder 23 to the light emitting device 213 corresponding to the processor 1-3, which is indicated in the ID, and reads the data stored in the read/write address of the memory cell unit 28, and then outputs the read data to the encoder 23.

Accordingly, the read data is converted into optical signals of the frequency band TP3 by the light emitting device 213, and outputted to the optical fiber cable 4. The optical signals of the frequency band TP3, which indicate the read data, are converted into data signals which can be processed in the data processing unit 14 by the decoder 17, and outputted to the data processing unit 14.

Although communication between a processor and a memory is explained in the embodiment described above, communication between processors can also be made in the same manner.

As is apparent from the above description, according to the present invention, since the different frequency bands are assigned to each of the memories and processors in the multi-processor system, the number of wiring connections in the multi-processor system can be drastically reduced.

Moreover, since the number of wiring connections becomes significantly less and the speed of communication becomes fast, the multi-processor system can be configured using more processors and memories than ever.

Moreover, since the arbitrator grants only one communication at a time, requests can be handled properly even when several transmission requests are simultaneously sent to an apparatus.

Furthermore, since the frequency band of optical signals identifies a destination, it is unnecessary to send information on destination addresses.

While the invention has been described in terms of several preferred embodiments, those skilled in the art will recognize that the invention can be practiced with modification within the spirit and scope of the invention.

## Claims

1. A multi-processor system having a plurality of processors and at least one memory optically connected each other, said plurality of processors and said at least one memory are assigned a different frequency band, wherein one of said plurality of processors and said at least one memory transmits a communication to another one of said plurality of processors and said at least one memory as a destination using a frequency band assigned to the destination.

2. A multi-processor system having a plurality of processors, at least one memory, and an optically-connecting network, wherein said optically-connecting network assigns a different frequency band to each of said plurality of processors and said at least one memory, and transmits a communication from one of said plurality of processors and said at least one memory to another one of said plurality of processors and said at least one memory as a destination using a frequency band assigned to the destination.

3. The multi-processor system according to claim 2, each of said plurality of processors comprising:
a processor light emitting circuit for outputting an optical signal of a frequency band corresponding to said destination to said optically connecting network; and
a processor photo-detection circuit for photo-detection of an optical signal of a frequency band assigned to the processor of said plurality of processors.

4. The multi-processor system according to claim 3, said processor light emitting circuit comprising:
light emitting devices for emitting lights of frequency bands corresponding to said destination; and
a multiplexer for selecting one of said light emitting devices corresponding to the destination.

5. The multi-processor system according to claim 3, said processor photo-detection circuit in each of the plurality of processors comprises:
an optical filter for filtering out optical signals of frequency bands other than the frequency band assigned to the processor of said plurality of processors; and
a photo-detection device for converting said optical signals from said optical filter into electric signals.

6. The multi-processor system according to claim 2, said memory comprising;
a memory light emitting circuit for outputting an optical signal of a frequency band corresponding to said destination to said optically connecting network; and
a memory photo-detection circuit for photo-detection of an optical signal of a frequency band assigned to the memory of said at least one memory.

7. The multi-processor system according to claim 6, said memory light emitting circuit in each memory comprising:
light emitting devices for emitting lights of frequency bands corresponding to said destination; and
a multiplexer for selecting one of said light emitting devices corresponding to the destination.

8. The multi-processor system according to claim 6, said memory photo-detection circuit comprising:
an optical filter for filtering out optical signals of frequency bands other than the frequency band assigned to the memory of said at least one memory; and
a photo-detection device for converting said optical signals from said optical filter into electric signals.

9. The multi-processor system according to claim 2, further comprising an arbitrator for arbitrating communication requests from said plurality of processors, said arbitrator comprising:
an arbitrator light emitting circuit for outputting an optical signal of a frequency band corresponding to said destination to said optically connecting network; and
a processor photo-detection circuit for photo-detection of an optical signal of a frequency band assigned to said arbitrator.

10. The multi-processor system according to claim 9, said arbitrator light emitting circuit comprising:
light emitting devices for emitting lights of frequency bands corresponding to said destination; and
a multiplexer for selecting one of said light emitting devices corresponding to the destination.

11. The multi-processor system according to claim 9, said arbitrator photo-detection circuit comprising:
optical filters for filtering out optical signals of frequency bands other than the frequency bands assigned to said arbitrator; and
photo-detection devices for converting said optical signals from said optical filters into electric signals.

12. An inter-processor arbitration method in a multi-processor system in which a plurality of processors and at least one memory are optically connected to each other, and which a different frequency band is assigned to each of said plurality of processors and said at least one memory, and which one of said plurality of processors and said at least one memory transmits a communication to another one of said plurality of processors and said at least one memory as a destination using a frequency band assigned to the destination, said inter-processor arbitration method comprising:
a grouping step of grouping communication requests into groups classified by the same communication destination;
a selection step of selecting a communication request from the highest priority processor in each group; and
a grant step of granting a processor, which has issued the communication request selected in the selection step, a grant to make a communication.
